# EUROPÄISCHE PATENTANMELDUNG

(11) **EP 3 339 989 A1**
(43) Veröffentlichungstag der Anmeldung: **27.06.2018**
(21) Anmeldenummer: 16205726.9
(22) Anmeldetag: 21.12.2016
(51) Int. Cl.: G05B 19/042

(54) **VERFAHREN ZUM ÜBERPRÜFEN EINER MANDANTENZUORDNUNG, COMPUTERPROGRAMMPRODUKT UND AUTOMATISIERUNGSSYSTEM MIT FELDGERÄTEN**

(71) Anmelder: Siemens Aktiengesellschaft, 80333 München (DE)
(72) Erfinder: Falk, Rainer, 85586 Poing (DE); Merli, Dominik, 86609 Donauwörth (DE); Wimmer, Martin, 85579 Neubiberg (DE)

(57) **Zusammenfassung**

Es wird ein Verfahren zum Überprüfen einer in einem Backend (100) für eine Mehrzahl N von Mandanten (T1,...,TN) verwalteten Mandantenzuordnung (Z) von in einem Automatisierungssystem (AS1, AS2) angeordneten Feldgeräten (FD1,...,FDn) vorgeschlagen. Ein jedes der Feldgeräte (FD1,...,FDn) ist mindestens einem der N Mandanten (T1,...,TN) zugeordnet und ist mittels des Backends (100) von dem zugeordneten Mandanten (T1,...,TN) verwaltbar. Das Verfahren umfasst die Schritte: Speichern einer Zuordnungsinformation (I1,...,In) für ein jedes der Feldgeräte (FD1,...,FDn) in dem Backend (100), wobei die Zuordnungsinformation (I1,...,In) die Zuordnung des jeweiligen Feldgeräts (FD1,...,FDn) zu dem Mandanten (T1,...,TN) umfasst; Übermitteln der Zuordnungsinformation (I1,...,In) an eine dem Automatisierungssystem (AS1, AS2) zugeordnete Empfangseinheit (R1,...,Rp); und Bereitstellen der übermittelten Zuordnungsinformation (I1,...,In) durch die Empfangseinheit (R1,...,Rp) in dem Automatisierungssystem (AS1, AS2). Damit kann ein Mandant (T1,...,TN) vorteilhafterweise die Zuordnung der in seinem Automatisierungssystem (AS1, AS2) angeordneten Feldgeräte (FD1,...,FDn) jederzeit und selbstständig überprüfen.

Ferner werden ein Computerprogrammprodukt und ein Automatisierungssystem (AS1, AS2) mit Feldgeräten (FD1,...,FDn) vorgeschlagen, wobei ein jedes der Feldgeräte (FD1,...,FDn) mittels eines Backends (100) durch einen zugeordneten Mandanten (T1,...,TN) einer Mehrzahl N von Mandanten (T1,...,TN) verwaltbar ist.

## Beschreibung

Die vorliegende Erfindung betrifft ein Verfahren zum Überprüfen einer Mandantenzuordnung, ein entsprechendes Computerprogrammprodukt sowie ein Automatisierungssystem mit Feldgeräten.

Es sind Automatisierungssysteme bekannt, die eine Vielzahl an Feldgeräten wie beispielsweise Sensoren, Aktoren, Überwachungsgeräte, Roboter und dergleichen mehr umfassen, wobei beispielsweise auch verschiedene Abhängigkeiten zwischen verschiedenen Feldgeräten eines solchen Automatisierungssystems existieren können. Ferner kann es erwünscht sein, verschiedene Automatisierungssysteme, die zum Beispiel an verschiedenen Standorten auf der Erde aufgebaut sind, von einem zentralen Punkt aus, wie beispielsweise einer Firmenzentrale, überwachen und/oder steuern zu können. Der Aufwand, der für die Einrichtung einer solchen Überwachungs- und Steuerungszentrale mit den dafür benötigten Kommunikationsverbindungen nötig ist, als auch für das Betreiben eines solchen Netzwerks, kann insbesondere für kleinere oder mittelgroße Unternehmen eine nicht zu schaffende Aufgabe darstellen.

Aus diesem Grund haben sich verschiedene Dienstleistungsunternehmen gebildet, die derartige Dienste anbieten. Um den Kostenrahmen dabei überschaubar zu halten, werden dabei häufig einzelne Knotenpunkte oder Server dazu verwendet, die Kommunikation mit mehreren Automatisierungsnetzwerken zu verwalten. Die Automatisierungsnetzwerke können dabei insbesondere unterschiedlichen Mandanten gehören. Ein solches System wird beispielsweise Multi-Tenant-Backend genannt. In dem Multi-Tenant-Backend ist insbesondere für jedes darüber verwaltbare Feldgerät eine Zuordnungsinformation hinterlegt. Die Zuordnungsinformation legt fest, welcher Mandant ein jeweiliges Feldgerät konfigurieren kann bzw. an welchen Mandanten die Daten, die von dem Feldgerät erfasst werden, gesendet werden.

Da die Zuordnungsinformation in dem Multi-Tenant-Backend verwaltet wird, ist es für einen Mandanten nicht jederzeit möglich, die Zuordnung der Feldgeräte zu einem Mandanten von in seinem Automatisierungssystem angeordneten Feldgeräten zu überprüfen. Hieraus ergibt sich ein Sicherheitsrisiko, da es möglich ist, dass ein Feldgerät Daten in unzulässiger Weise an Dritte überträgt, beispielsweise um eine aktuelle Produktion oder Auslastung zu ermitteln.

Vor diesem Hintergrund besteht eine Aufgabe der vorliegenden Erfindung darin, eine Möglichkeit zu schaffen, dass ein Mandant die Feldgeräte in seinem Automatisierungssystem überprüfen kann.

Demgemäß wird ein Verfahren zum Überprüfen einer in einem Backend für eine Mehrzahl N von Mandanten verwalteten Mandantenzuordnung von in einem Automatisierungssystem angeordneten Feldgeräten vorgeschlagen. Ein jedes der Feldgeräte ist mindestens einem der N Mandanten zugeordnet und ist mittels des Backends von dem zugeordneten Mandanten verwaltbar. Das Verfahren umfasst die Schritte: Speichern einer Zuordnungsinformation für ein jedes der Feldgeräte in dem Backend, wobei die Zuordnungsinformation die Zuordnung des jeweiligen Feldgeräts zu dem Mandanten umfasst; Übermitteln der Zuordnungsinformation an eine dem Automatisierungssystem zugeordnete Empfangseinheit; und Bereitstellen der übermittelten Zuordnungsinformation durch die Empfangseinheit in dem Automatisierungssystem.

Ein solches Verfahren erlaubt es einem Mandanten vorteilhaft, die Zuordnung der in seinem Automatisierungssystem angeordneten Feldgeräte jederzeit und selbstständig zu überprüfen. Damit kann der Mandant selbst sicherstellen, dass alle in dem Automatisierungssystem angeordneten Feldgeräte nur ihm selbst und/oder weiteren, von ihm autorisierten Mandanten, zugeordnet sind. Dies hat den Vorteil, dass beispielsweise ein Ausspionieren eines Automatisierungssystems, wie einer industriellen Produktionsanlage, mittels Feldgeräten, die beispielsweise Informationen über einen Betriebszustand der Produktionsanlage erfassen und an unautorisierte Dritte weiterleiten, von dem Mandanten selbst erkannt und unterbunden werden kann.

Ein System mit mehreren Automatisierungssystemen, wobei jedes der Automatisierungssysteme mehrere Feldgeräte aufweist und zumindest einige der Feldgeräte von einem zentralen Backend verwaltbar sind, wird beispielsweise auch als "Internet of Things" (IoT) bezeichnet. Das Backend, auch als "Multi-Tenant-Backend" bezeichnet, ist beispielsweise ein Server, der von einem Service-Anbieter bzw. einem Drittanbieter betrieben wird und der ein Verwalten einer Vielzahl von Feldgeräten, die insbesondere auch unterschiedlichen Mandanten zugeordnet sein können, bereitstellt. Das Backend kann auch als Cloud-Dienst bezeichnet werden. Das Backend ist insbesondere ein Server oder Computer mit einer Internet-Verbindung, wobei die Internet-Verbindung über ein kabelgebundenes Netzwerk wie ein LAN (Local Area Network) und/oder über ein Mobilfunknetzwerk wie zum Beispiel ein 3G, ein 4G und/oder ein 5G Netzwerk, ein Wireless LAN, WiMax (Worldwide Interoperability for Microwave Access), Bluetooth, ZigBee, IEEE 802.15.4 Netzwerk oder einen anderen IoT-Funkstandard wie SigFox oder LoRa (LoRaWAN) hergestellt werden kann. Über dieses Netzwerk oder diese Internet-Verbindung ist das Backend in der Lage, Daten sowohl mit den Feldgeräten als auch mit den Mandanten auszutauschen.

Ein Automatisierungssystem kann insbesondere auch Feldgeräte umfassen, die nicht über das Backend verwaltbar sind, oder zumindest nicht direkt über das Backend verwaltbar sind. Beispielsweise kann vorgesehen sein, dass ein Feldgerät als eine Instanz eines übergeordneten Feldgeräts lediglich mittelbar über das übergeordnete Feldgerät verwaltbar ist oder das übergeordnete Feldgerät verwaltet das Feldgerät selbsttätig oder automatisch.

Ein Mandant ist insbesondere eine natürliche und/oder eine juristische Person. Ein Mandant kann auch ein weiteres Feldgerät und/oder eine Instanz eines Computerprogramms oder eines Steuerungsprogramms sein. Ein Mandant wird beispielsweise durch einen Identifier gekennzeichnet, wie eine Zeichenkette, eine URI (Unique Resource Identifier), eine URL (Unique Resource Location), eine Email-Adresse, einen öffentlichen Schlüssel und/oder eine Prüfsumme eines öffentlichen Schlüssels.

Das Automatisierungssystem ist beispielsweise eine industrielle Produktionsanlage, wie z.B. eine Fabrik. Das Automatisierungssystem kann auch als Automatisierungsnetzwerk bezeichnet werden. Das Automatisierungssystem umfasst insbesondere eine Mehrzahl an Feldgeräten, umfassend Sensoren, Produktionsgeräte, Überwachungseinheiten, wie beispielsweise eine Kamera und/oder ein Mikrofon, Roboter und/oder weitere Geräte, die zum Erfassen von Informationen eingerichtet sind und/oder die steuerbar sind. Durch Feldgeräte erfasste Informationen umfassen insbesondere visuelle Aufnahmen, Audioaufnahmen, Umgebungsparameter, Produktionsparameter und/oder weitere Parameterwerte, die das Automatisierungssystem betreffen. Verschiedene Feldgeräte in einem Automatisierungssystem können wechselseitig interagieren und zusammenwirken, um beispielsweise einen komplexen Produktionsprozess zu realisieren. Hierfür kann vorgesehen sein, dass die entsprechenden Feldgeräte miteinander kommunizieren und/oder Daten austauschen.

Die Informationen, die von den Feldgeräten in einem Automatisierungssystem erfasst werden, können sensible Informationen für ein Unternehmen sein. Beispielsweise können Informationen über Lagerbestände von Spezialteilen, die für eine Produktion benötigt werden, von einem Hersteller der Spezialteile dazu verwendet werden, den Preis für die Spezialteile zu erhöhen, wenn die Lagerbestände gering sind. Unternehmen haben daher ein Interesse daran, derartige Informationen nicht nach außen dringen zu lassen.

Die in dem Backend verwaltete Mandantenzuordnung umfasst insbesondere eine Zuordnungstabelle. Diese weist beispielsweise Einträge für ein jedes Feldgerät sowie den dem Feldgerät zugeordneten Mandanten auf. Die Zuordnungstabelle ist damit insbesondere eine Auflistung der Zuordnungsinformationen. Die Zuordnungsinformation umfasst für ein jedes Feldgerät individuell zumindest einen zugeordneten Mandanten. Die Zuordnungsinformation für ein Feldgerät kann aber auch mehrere Mandantenzuordnungen aufweisen. Ferner kann die zuordnungsinformation weitere Informationen, wie beispielsweise das Automatisierungssystem, in welchem ein jeweiliges Feldgerät angeordnet ist, aufweisen und/oder Mandantenattribute umfassen. Ein Mandantenattribut ist beispielsweise "Besitzer", "Operator", "Benutzer", "Service-Techniker" oder dergleichen mehr.

Die Feldgeräte sind insbesondere von dem oder den zugeordneten Mandanten mittels des Backends verwaltbar. Das Verwalten eines Feldgeräts umfasst insbesondere ein Auslesen von Daten, beispielsweise von erfassten Informationen des Automatisierungssystems, ein Konfigurieren des Feldgeräts, ein Steuern des Feldgeräts, ein Senden und/oder Empfangen von Daten an bzw. von dem Feldgerät. Feldgeräte, die Informationen über das Automatisierungssystem erfassen, können beispielsweise so konfiguriert sein, dass sie kontinuierlich oder in vorgegebenen Zeitintervallen oder bei bestimmten Ereignissen, wie beispielsweise einem Über- oder Unterschreiten eines Schwellwerts für einen Parameter, Daten über das Backend an den oder die zugeordneten Mandanten übermitteln. Dabei kann auch vorgesehen sein, dass bestimmte Daten nur an Mandanten, die ein bestimmtes Mandantenattribut aufweisen, übermittelt werden. Ferner kann vorgesehen sein, dass die erfassten Information auf dem Feldgerät zwischengespeichert werden und nur auf Anfrage seitens des Mandanten übermittelt werden. Steuerbare Feldgeräte, wie beispielsweise Produktionsgeräte, wie eine CNC-Fräse oder ein 3D-Drucker, können insbesondere über das Backend steuerbar sein. Hierfür kann vorgesehen sein, dass ein Konstruktionsplan für ein Bauteil, das die CNC-Fräse oder der 3D-Drucker produzieren soll, mittels des Backends von dem Mandanten an die CNC-Fräse oder an den 3D-Drucker übermittelt wird.

Das Speichern der Zuordnungsinformation für ein jedes der Feldgeräte in der Mandantenzuordnung in dem Backend erfolgt beispielsweise auf einer dem Backend zugeordneten Speichereinheit, wie beispielsweise eine Festplatte. Andere Speichermedien, wie beispielsweise ein USB-Stick, ein ROM, ein RAM usw. sind ebenfalls denkbar. Ein Ändern einer Zuordnungsinformation kann beispielsweise nur von dem Service-Anbieter des Backends durchgeführt werden.

Das Übermitteln der Zuordnungsinformation von dem Backend an die Empfangseinheit in dem Automatisierungssystem erfolgt insbesondere mittels eines Datennetzwerks. Beispielsweise erfolgt das Übermitteln als eine Datenübertragung in einem kabelgebundenen Netzwerk und/oder in einem Mobilfunknetzwerk. Die Empfangseinheit ist beispielsweise als ein Gateway des Automatisierungsnetzwerks ausgebildet. Dabei kann vorgesehen sein, dass das Gateway die empfangene Zuordnungsinformation für ein jedes der Feldgeräte an das Feldgerät weiterleitet und/oder die Zuordnungsinformationen abspeichert. Ferner kann eine zentrale Anzeigevorrichtung vorgesehen sein, welche die übermittelte Zuordnungsinformation darstellt. Eine solche Anzeigevorrichtung kann beispielsweise in einem Kontrollraum einer Firmenzentrale angeordnet sein. Ferner kann zumindest ein Teil der Feldgeräte eine dem Feldgerät zugeordnete Empfangseinheit aufweisen.

Das Bereitstellen der übermittelten Zuordnungsinformation umfasst beispielsweise ein Anzeigen der Zuordnungsinformation auf einem Bildschirm und/oder ein Bereitstellen der Zuordnungsinformation an ein Diagnosegerät. Dann kann beispielsweise ein Operator eines entsprechenden Feldgeräts die Zuordnungsinformation direkt auslesen und überprüfen.

Das vorgeschlagene Verfahren stellt für Mandanten eine technische Lösung bereit, um sicherzustellen, dass in einem Automatisierungssystem nur Feldgeräte installiert sind, die ihm selbst oder von ihm autorisierten Mandanten zugeordnet sind, indem der Mandant selbst die Zuordnung aller Feldgeräte in einem Automatisierungssystem überprüfen kann.

Gemäß einem Ausführungsbeispiel des Verfahrens erfolgt das Übermitteln der Zuordnungsinformation über ein drahtgebundenes Datennetzwerk und/oder über ein Mobilfunknetzwerk.

Diese Konfiguration hat den Vorteil, dass bereits existierende Netzwerke für die Übertragung der Zuordnungsinformation verwendet werden.

Gemäß einer weiteren Ausführungsform des Verfahrens weist ein jedes der Feldgeräte eine dem Feldgerät zugeordnete Empfangseinheit auf.

Diese Ausführungsform ermöglicht es insbesondere, dass ein jedes Feldgerät direkt vor Ort überprüft werden kann. Beispielsweise ist denkbar, dass ein Feldgeräte-Beauftragter die Zuordnungsinformation des Feldgeräts überprüft. Dies erfolgt beispielsweise, indem der Feldgeräte-Beauftragte die Information aus dem jeweiligen Feldgerät ausliest und mit einer vorgegebenen Soll-Zuordnung vergleicht. Ferner kann vorgesehen sein, dass ein jedes der Feldgeräte ein Display zum Anzeigen der Zuordnungsinformation aufweist. Dann genügt ein kurzer Blick, um eine Korrektheit der Zuordnung zu verifizieren.

Gemäß einer weiteren Ausführungsform weist zumindest eines der Feldgeräte eine dem Feldgerät zugeordnete Kommunikationseinrichtung auf, die zum Aufbau einer dedizierten Kommunikationsverbindung mit dem Backend eingerichtet ist.

Eine solche Kommunikationseinrichtung ist beispielsweise als ein Modem, insbesondere ein Mobilfunkmodem, ausgebildet. Die Kommunikationsverbindung kann dabei beispielsweise über ein 3G-, 4G- und/oder 5G-Mobilfunknetzwerk oder über ein Wireless LAN aufgebaut werden. Vorteilhaft ist die Kommunikationseinrichtung auch zum Empfang der Zuordnungsinformation eingerichtet und erfüllt damit auch die Funktion der zuvor beschriebenen Empfangseinheit.

Bei einem solchen Aufbau kann daher das entsprechende Feldgerät unabhängig von einem Gateway und/oder einem Sicherheitsserver mit dem Backend kommunizieren. Das heißt, dass das Feldgerät ohne eine Kontrolle des Betreibers des Automatisierungssystems Daten mit dem Backend austauschen kann. Insbesondere bei einer solchen Konfiguration ist es vorteilhaft, wenn ein jedes der Feldgeräte bezüglich seiner Zuordnungsinformation überprüft werden kann.

Gemäß einer weiteren Ausführungsform des Verfahrens weist das Automatisierungssystem eine einzige zentrale Empfangseinheit auf.

Gemäß einer weiteren Ausführungsform des Verfahrens ist die einzige zentrale Empfangseinheit einem Gateway des Automatisierungsnetzwerks zugeordnet, wobei das Gateway zur Übertragung von Daten zwischen dem Backend und den Feldgeräten gekoppelt ist.

Dies ist insbesondere dann sinnvoll, wenn eine Kommunikation mit den Feldgeräten eines Automatisierungssystems ausschließlich über ein kabelgebundenes Datennetzwerk erfolgt. Dann ist das Gateway beispielsweise dazu eingerichtet, die Kommunikation eines jeden Feldgeräts mit dem Backend auszuführen. Ferner ermöglicht ein solcher Aufbau, dass die Zuordnungsinformation für ein jedes der in dem Automatisierungsnetzwerk angeordneten Feldgeräte an einer zentralen Stelle überprüfbar ist.

Gemäß einer weiteren Ausführungsform des Verfahrens umfasst dieses ferner den Schritt: Überprüfen der durch die Empfangseinheit bereitgestellten Zuordnungsinformation.

Ein Überprüfen umfasst beispielsweise ein Vergleichen der Zuordnungsinformation mit einer Soll-Zuordnung. Eine solche Soll-Zuordnung kann beispielsweise eine eineindeutige Zuordnung eines jeden Feldgeräts zu einem Mandanten darstellen, oder es kann eine Positivliste von zulässigen Mandanten vorliegen. Die zulässige Zuordnung kann dabei auch von einem Feldgeräte-Typ abhängen. Das Überprüfen kann beispielsweise durch Sicherheitspersonal erfolgen.

Gemäß einer weiteren Ausführungsform des Verfahrens umfasst dieses ferner den Schritt: Durchführen einer vorgegebenen Aktion in Abhängigkeit eines Ergebnisses des Überprüfens der durch die Empfangseinheit bereitgestellten Zuordnungsinformation.

Eine vorgegebene Aktion umfasst beispielsweise einen optischen und/oder akustischen Alarm, ein Senden einer Push-Nachricht an eine dafür eingerichtete Einheit, wie beispielsweise einen Pager und/oder ein Mobiltelefon. Weitere denkbare Aktionen sind beispielsweise ein Ausschalten des entsprechenden Feldgeräts, ein Unterbrechen einer Kommunikationsverbindung des Feldgeräts mit dem Backend, ein Anhalten des Automatisierungssystems und/oder ein komplettes Abschotten des Automatisierungssystems von der Außenwelt.

Gemäß einer weiteren Ausführungsform des Verfahrens ist vorgesehen, dass eine dem Automatisierungssystem zugeordnete Sicherheitsinstanz das Überprüfen der Zuordnungsinformation automatisiert durchführt.

Diese Ausführungsform umfasst insbesondere auch ein Bereitstellen der Zuordnungsinformation von den Empfangseinheiten an die Sicherheitsinstanz. Alternativ oder zusätzlich kann die Sicherheitsinstanz selbst zusätzlich als Empfangseinheit für die Zuordnungsinformationen dienen. Die Sicherheitsinstanz kann beispielsweise als eine Recheneinheit, wie ein Server und/oder ein Computer, ausgebildet sein. In der Sicherheitsinstanz können beispielsweise eineindeutige Zuordnungsinformationen, die lokal von dem Mandanten vorgegeben werden, abgelegt sein. Ferner können Regeln vorgesehen sein, die ein automatisches Überprüfen ermöglichen. Beispielsweise kann vorgegeben sein, dass alle Feldgeräte genau einem bestimmten Mandanten zugeordnet sind.

Gemäß einer weiteren Ausführungsform des Verfahrens ist vorgesehen, dass die Feldgeräte gegenseitig ihre Zuordnungsinformation überprüfen.

Beispielsweise kann vorgesehen sein, dass jedes Feldgerät prüft, ob die Feldgeräte, mit denen es in Verbindung steht, dem gleichen Mandanten zugeordnet ist und/oder einem Mandanten zugeordnet ist, der auf einer dem Feldgerät vorliegenden Positivliste enthalten ist. Falls keine dieser Forderungen zutrifft, kann das Feldgerät beispielsweise so konfiguriert sein, dass es ein Alarmsignal ausgibt oder eine andere Aktion vornimmt.

Gemäß einer weiteren Ausführungsform des Verfahrens umfasst dieses ferner den Schritt: Darstellen der Zuordnungsinformation mittels eines dem Feldgerät zugeordneten Ausgabegeräts und/oder mittels eines in dem Automatisierungssystem angeordneten zentralen Ausgabegeräts.

Ein Ausgabegerät umfasst beispielsweise eine Leuchtdiode und/oder ein Display. Diese Ausführungsform ermöglicht insbesondere ein einfaches und schnelles Erfassen der Zuordnungsinformation durch entsprechendes Personal.

Gemäß einer weiteren Ausführungsform des Verfahrens ist die Zuordnungsinformation und/oder die Mandantenzuordnung kryptographisch geschützt gespeichert und/oder wird kryptographisch geschützt übermittelt und/oder wird kryptographisch geschützt verifiziert.

Beispielsweise sind die Mandantenzuordnung und/oder die Zuordnungsinformation durch eine kryptographische Prüfsumme geschützt. Die Prüfsumme kann dabei dem Feldgerät und/oder dem Backend zugeordnet sein. Eine kryptographische Prüfsumme ist insbesondere eine digitale Signatur und/oder ein Nachrichten-Authentisierungscode (Message Authentication Code). Mit dieser Ausführungsform kann sichergestellt werden, dass ein unbefugter Zugriff auf die Zuordnungsinformation und/oder die Mandantenzuordnung nicht möglich ist. Ferner kann sichergestellt werden, dass eine an ein Feldgerät übermittelte Zuordnungsinformation tatsächlich von dem Backend übermittelt wurde.

Gemäß einer weiteren Ausführungsform des Verfahrens umfasst die Zuordnungsinformation eine Mandanteneigenschaft.

Eine Mandanteneigenschaft ist beispielsweise ein Attribut, wie "Eigentümer", "Operator", "Benutzer", "Sicherheitsbeauftragter" und/oder "Service-Techniker". In dieser Ausführungsform ist es möglich, dass eine komplexere Kontrolle des Feldgeräts erfolgt. Beispielsweise kann vorgesehen sein, dass sicherheitsrelevante Informationen, wie Softwarestände, Routing-Informationen einer Kommunikationsverbindung und/oder die Zuordnungsinformation selbst, von dem Feldgerät nur an einen Sicherheitsserver gesendet werden. Beispielsweise ein Operator kann hingegen Produktionspläne an ein Feldgerät übermitteln, ohne Zugriff auf weitere Informationen des Feldgeräts zu haben.

Gemäß einer weiteren Ausführungsform des Verfahrens umfasst dieses ferner die Schritte: Anfragen einer Kommunikationsverbindung zwischen einem ersten Feldgerät in dem Automatisierungssystem und einem zweiten Feldgerät in dem Automatisierungssystem durch das erste Feldgerät mittels einer Anfrage, wobei die Anfrage die Zuordnungsinformation des ersten Feldgeräts umfasst, und Herstellen der Kommunikationsverbindung, wenn die in der Anfrage enthaltene Zuordnungsinformation mit der Zuordnungsinformation des zweiten Feldgeräts übereinstimmt, oder Ablehnen der Kommunikationsverbindung, wenn die in der Anfrage enthaltene Zuordnungsinformation mit der Zuordnungsinformation des zweiten Feldgeräts nicht übereinstimmt.

In dieser Ausführungsform ist vorteilhaft sichergestellt, dass nur Feldgeräte Daten miteinander austauschen können, die dem oder den gleichen Mandanten zugeordnet sind. Damit lässt sich beispielsweise eine einfache Kontrolle eines Datennetzwerks realisieren, indem beispielsweise ein Gateway, welches die Datenkommunikation des Automatisierungsnetzwerks durchführt, die gleiche Zuordnungsinformation wie die Feldgeräte, die über dieses Gateway kommunizieren, aufweisen muss.

Gemäß einem zweiten Aspekt wird ein Computerprogrammprodukt vorgeschlagen, welches auf einer programmgesteuerten Einrichtung die Durchführung des wie oben erläuterten Verfahrens gemäß dem ersten Aspekt oder einer der Ausführungsformen des ersten Aspekts veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird ein Automatisierungssystem mit Feldgeräten vorgeschlagen, wobei ein jedes der Feldgeräte mittels eines Backends durch einen zugeordneten Mandanten einer Mehrzahl N von Mandanten verwaltbar ist. Das Backend ist zum Verwalten einer Mandantenzuordnung mit einer Zuordnungsinformation für ein jedes der Feldgeräte eingerichtet. Das Automatisierungssystem weist eine Anzahl von Empfangseinheiten auf, die zum Empfangen und zum Bereitstellen der zur Empfangsinformation für ein jedes der in dem Automatisierungssystem angeordneten Feldgeräte eingerichtet ist.

Ein solches Automatisierungssystem ist insbesondere mittels des Verfahrens gemäß dem ersten Aspekt und/oder einer der Ausführungsformen des ersten Aspekts betreibbar.

Feldgeräte umfassen zum Beispiel eine Recheneinheit oder eine Steuerungseinheit. Diese kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einem vierten Aspekt wird eine Anordnung mit einem Backend und einer Mehrzahl von Automatisierungssystemen vorgeschlagen. Ein jedes der Automatisierungssysteme weist eine Mehrzahl von Feldgeräten auf, die mittels des Backends durch einen zugeordneten Mandanten einer Mehrzahl N von Mandanten verwaltbar sind. Das Backend ist zum Verwalten einer Mandantenzuordnung mit einer Zuordnungsinformation für ein jedes Feldgerät eingerichtet. Jedes der Automatisierungssysteme weist eine Anzahl von Empfangseinheiten auf, die zum Empfangen und zum Bereitstellen der Zuordnungsinformation für ein jedes der in dem Automatisierungssystem angeordneten Feldgeräte eingerichtet ist.

Gemäß einem fünften Aspekt wird ein Verfahren zum Überprüfen einer in einem Backend für eine Mehrzahl N von Mandanten verwalteten Mandantenzuordnung von in einem Automatisierungssystem angeordneten Feldgeräten vorgeschlagen, wobei ein jedes der Feldgeräte einem der N Mandanten zugeordnet ist und mittels des Backends von dem zugeordneten Mandanten verwaltbar ist. Das Verfahren umfasst die Schritte: Speichern einer Zuordnungsinformation für ein jedes der Feldgeräte in dem Backend, wobei die Zuordnungsinformation die Zuordnung des jeweiligen Feldgeräts zu dem Mandanten umfasst; Übermitteln von dem Feldgerät bereitgestellten Feldgerätedaten an das Backend; und Überprüfen der in dem Backend gespeicherten Zuordnungsinformation des Feldgeräts in Abhängigkeit der übermittelten Feldgerätedaten.

Die Verfahren gemäß dem ersten Aspekt oder einer der Ausführungsformen des ersten Aspekts und des fünften Aspekts sind kombinierbar.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockschaltbild eines ersten Ausführungsbeispiels eines Systems mit zwei Automatisierungssystemen mit Feldgeräten, die mittels eines Backends von Mandanten verwaltbar sind;
- Fig. 2: zeigt ein schematisches Blockschaltbild eines zweiten Ausführungsbeispiels eines Systems mit zwei Automatisierungssystemen mit Feldgeräten, die mittels eines Backends von Mandanten verwaltbar sind;
- Fig. 3: zeigt ein schematisches Blockschaltbild eines dritten Ausführungsbeispiels eines Systems mit zwei Automatisierungssystemen mit Feldgeräten, die mittels eines Backends von Mandanten verwaltbar sind;
- Fig. 4: zeigt ein schematisches Blockschaltbild eines Systems mit einem Automatisierungssystem und einem Backend;
- Fig. 5: zeigt ein schematisches Ablaufdiagramm eines Ausführungsbeispiels für ein Verfahren zum Überprüfen einer Mandantenzuordnung in einem Backend; und
- Fig. 6: zeigt ein schematisches Ablaufdiagramm eines Ausführungsbeispiels für ein Verfahren zum Herstellen einer Kommunikationsverbindung.

In den Figuren sind gleiche oder funktionsgleiche Elemente mit denselben Bezugszeichen versehen worden, sofern nichts anderes angegeben ist.

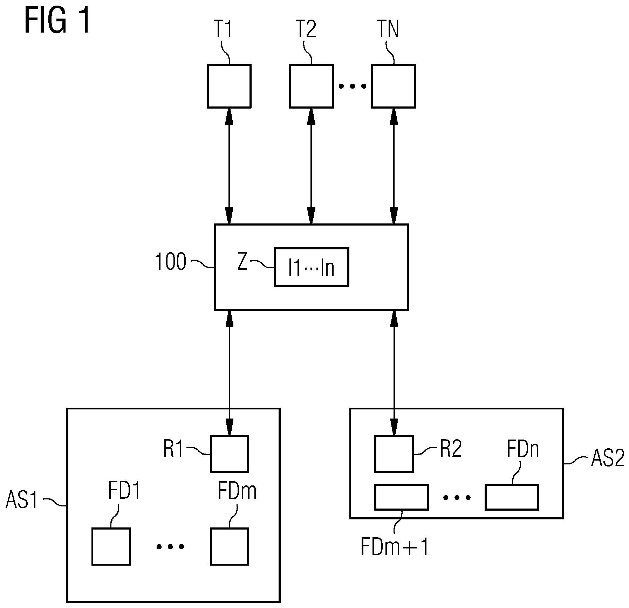

Fig. 1 zeigt ein schematisches Blockschaltbild eines ersten Ausführungsbeispiels eines Systems mit einem Automatisierungssystem AS1 mit Feldgeräten FD1 - FDm und einem Automatisierungssystem AS2 mit Feldgeräten FDm+1 - FDn, die mittels eines Backends 100 von Mandanten T1 - TN verwaltbar sind. In dem Backend 100 ist eine Mandantenzuordnung Z abgespeichert. Die Mandantenzuordnung Z umfasst eine Tabelle mit einer Zuordnungsinformation I1 - In für ein jedes der Feldgeräte FD1 - FDn. Die Zuordnungsinformation I1 - In weist für ein jedes der Feldgeräte FD1 - FDn einen zugeordneten Mandanten auf. Das heißt, dass ein jedes der Feldgeräte FD1 - FDn mindestens einem der Mandanten T1 - TN zugeordnet ist. Ein einem Mandanten T1 - TN zugeordnetes Feldgerät FD1 - FDn ist ausschließlich durch diesen zugeordneten Mandanten T1 - TN verwaltbar. Ein Feldgerät FD1 - FDn kann dabei auch mehreren Mandanten T1 - TN zugeordnet sein.

In diesem Ausführungsbeispiel sind die Feldgeräte FD1 - FDm dem ersten Automatisierungssystem AS1 zugeordnet. Das Automatisierungssystem AS1 weist ferner eine Empfangseinheit R1 auf, welche zum Empfangen der Zuordnungsinformation I1 - Im für die Feldgeräte FD1 - FDm eingerichtet ist. Das zweite Automatisierungssystem AS2 weist die Feldgeräte FDm+1 - FDn sowie eine dem Automatisierungssystem AS2 zugeordnete Empfangseinheit R2 auf. Die Empfangseinheit R2 ist dazu eingerichtet, von dem
Backend 100 die Zuordnungsinformation Im+1 - In für die Feldgeräte FDm+1 - FDn zu empfangen.

In dem Beispiel der Fig. 1 gehört das erste Automatisierungssystem AS1 beispielsweise dem ersten Mandanten T1. Das heißt, dass ein jedes der Feldgeräte FD1 - FDm des ersten Automatisierungssystems AS1 dem ersten Mandanten T1 zugeordnet ist. Dies hat zur Folge, dass ausschließlich der erste Mandant T1 die Feldgeräte FD1 - FDm mittels des Backends 100 verwalten kann. Verwalten bedeutet beispielsweise, mit den Feldgeräten FD1 - FDm eine Kommunikationsverbindung über das Backend 100 herzustellen und über diese Kommunikationsverbindung Daten mit den Feldgeräten FD1 - FDm auszutauschen. Diese Daten können beispielsweise von den Feldgeräten FD1 - FDm erfasste Daten umfassen und/oder Steuerbefehle für die Feldgeräte FD1 - FDm umfassen.

Die Feldgeräte FDm+1 - FDn des zweiten Automatisierungssystems AS2 sind beispielsweise eineindeutig unterschiedlichen Mandanten T2 - TN zugeordnet. Ein jeder der Mandanten T2 - TN kann daher über das Backend 100 lediglich das jeweilige ihm zugeordnete Feldgerät FDm+1 - FDn verwalten. Beispielsweise ist dem Mandanten T2 nur das Feldgerät FDm+1 zugeordnet. Damit ist ihm ein Verwalten des Feldgeräts FDn, wie beispielsweise ein Abrufen von Daten von dem Feldgerät FDn, das dem Mandanten TN zugeordnet ist, nicht möglich.

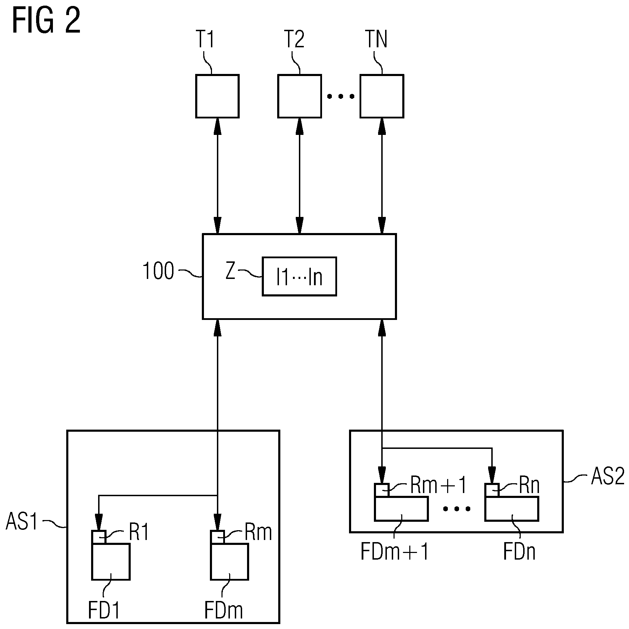

Die Fig. 2 zeigt ein schematisches Blockschaltbild eines zweiten Ausführungsbeispiels eines Systems mit zwei Automatisierungssystemen AS1, AS2 mit Feldgeräten FD1 - FDm, FDm+1 - FDn, die mittels eines Backends 100 von Mandanten T1, T2 - TN verwaltbar sind. In dem Beispiel der Fig. 2 weist ein jedes der Feldgeräte FD1 - FDm, FDm+1 - FDn eine dem Feldgerät zugeordnete Empfangseinheit R1 - Rm, Rm+1 - Rn auf. Die weiteren Merkmale dieses Ausführungsbeispiels entsprechen den bereits anhand von Fig. 1 beschriebenen Merkmalen.

Ein solches System hat insbesondere den Vorteil, dass die Zuordnung eines Feldgeräts FD1 - FDm, FDm+1 - FDn zu einem Mandanten direkt bei dem jeweiligen Feldgerät FD1 - FDm, FDm+1 - FDn überprüfbar ist. Beispielsweise kann ein Benutzer das jeweilige Feldgerät FD1 - FDm, FDm+1 - FDn aufsuchen und die Zuordnungsinformation I1 - In auslesen und auf Richtigkeit überprüfen.

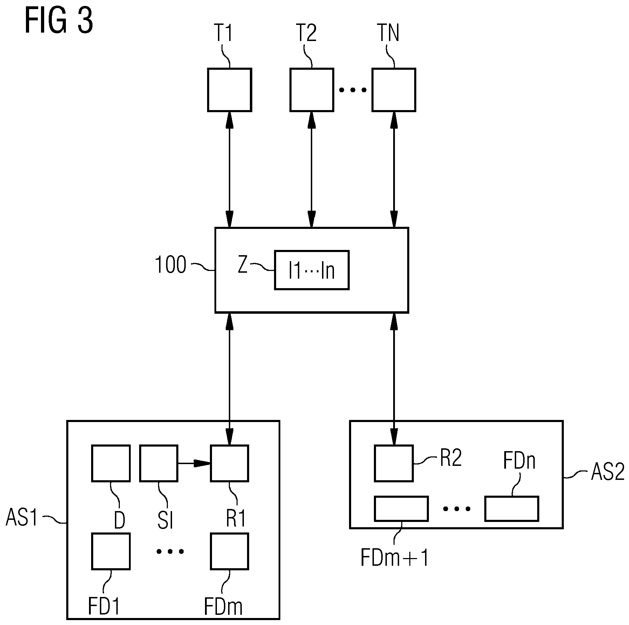

Fig. 3 zeigt ein schematisches Blockschaltbild eines dritten Ausführungsbeispiels eines Systems mit zwei Automatisierungssystemen AS1, AS2 mit Feldgeräten FD1 - FDm, FDm+1 - FDn, die mittels eines Backends 100 von Mandanten T1, T2 - TN verwaltbar sind. Das in der Fig. 3 dargestellte System weist die Merkmale und Eigenschaften des anhand der Fig. 1 beschriebenen Systems auf und darüber hinaus eine dem ersten Automatisierungssystem AS1 zugeordnete Sicherheitsinstanz SI.

Die Sicherheitsinstanz SI ist dazu eingerichtet, die an die Empfangseinheit R1 übermittelten Zuordnungsinformationen I1 - Im für die dem ersten Automatisierungssystem AS1 zugeordneten Feldgeräte FD1 - FDm automatisch zu überprüfen. Hierfür ist in der Sicherheitsinstanz SI beispielsweise eine Positivliste mit zulässigen Mandanten T1 hinterlegt. Wenn die Sicherheitsinstanz SI eine Zuordnungsinformation I2 - In erfasst, die eines der Feldgeräte FD1 - FDm einem Mandanten T2 - TN zuordnet, der in der Positivliste nicht enthalten ist, löst die Sicherheitsinstanz SI beispielsweise einen Alarm und/oder eine andere Aktion aus.

Ferner weist das erste Automatisierungssystem AS1 ein zentrales Ausgabegerät D auf. Das zentrale Ausgabegerät D ist als ein Bildschirm ausgebildet und dazu eingerichtet, die Zuordnungsinformationen I1 - Im der in dem Automatisierungssystem AS1 angeordneten Feldgeräte FD1 - FDm anzuzeigen. Hierzu wird auf dem Bildschirm D beispielsweise eine Tabelle angezeigt, deren erste Spalte ein Feldgerät FD1 - FDm identifiziert und in deren zweiten Spalte die Mandanten T1 - TN gemäß der Zuordnungsinformation I1 - Im aufgeführt sind, denen ein jeweiliges Feldgerät FD1 - FDm zugeordnet ist.

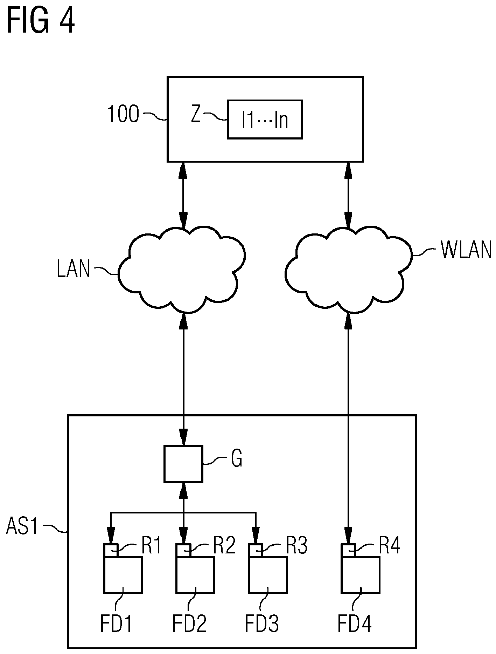

Fig. 4 zeigt ein schematisches Blockschaltbild eines Systems mit einem Automatisierungssystem AS1 und einem Backend 100. Das Automatisierungssystem AS1 weist Feldgeräte FD1 - FD4 auf, wobei ein jedes der Feldgeräte FD1 - FD4 eine dem Feldgerät FD1 - FD4 zugeordnete Empfangseinheit R1 - R4 aufweist.

Die Empfangseinheiten R1 - R3 der Feldgeräte FD1 - FD3 kommunizieren über ein Gateway G mittels eines kabelgebundenen Netzwerks LAN mit dem Backend 100. Das Gateway G kann dabei beispielsweise die Daten, die die Feldgeräte FD1 - FD3 an das Backend 100 übermitteln, unter Sicherheitsaspekten überprüfen. Die Empfangseinheit R4 des Feldgeräts FD4 kommuniziert über ein Mobilfunknetzwerk WLAN mit dem Backend 100. Aufgrund dieses Aufbaus ist es möglich, dass das Feldgerät FD4 über das Mobilfunknetzwerk WLAN Daten mit dem Backend 100 austauscht, die nicht von dem Gateway G des Automatisierungssystems AS1 überprüfbar sind. Insbesondere bei einem solchen Systemaufbau ist es vorteilhaft, wenn ein jedes der Feldgeräte FD1 - FD4 eine eigene Empfangseinheit R1 - R4 zum Empfangen der Zuordnungsinformation I1 - I4 von dem Backend 100 aufweist. Damit ist es ermöglicht, dass ein Benutzer in dem Automatisierungssystem AS1 die Feldgeräte FD1 - FD4 auf deren zugeordneten Mandanten hin überprüft.

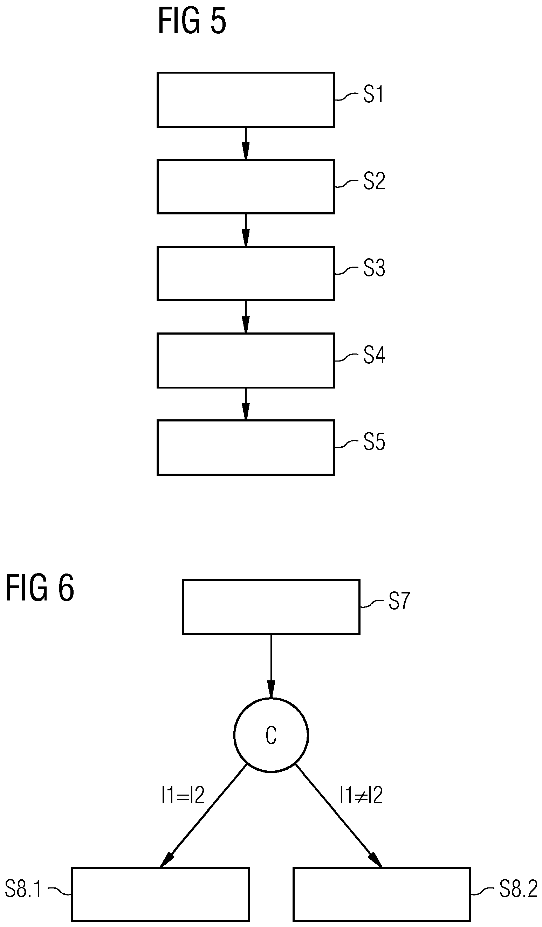

Fig. 5 zeigt ein schematisches Ablaufdiagramm eines Ausführungsbeispiels für ein Verfahren zum Überprüfen einer Mandantenzuordnung Z in einem Backend 100. Das Verfahren ist beispielsweise dazu geeignet, um auf einem System gemäß einer der Fig. 1 - 4 angewendet zu werden.

Im ersten Verfahrensschritt erfolgt ein Speichern S1 der Mandantenzuordnung Z. Die Mandantenzuordnung Z umfasst Zuordnungsinformationen I1 - In für ein jedes der Feldgeräte FD1 - FDn, die mittels des Backends 100 verwaltbar sind. Das Speichern S1 umfasst beispielsweise ein Übertragen einer entsprechenden Mandantenzuordnung Z auf einen dafür vorgesehenen Speicherbereich in dem Backend 100.

In dem zweiten Verfahrensschritt wird die Zuordnungsinformation I1 - In aus der Mandantenzuordnung Z von dem Backend 100 an eine Empfangseinheit R1 - Rn übermittelt S2. Das Übermitteln S2 umfasst insbesondere eine Datenübertragung mittels eines kabelgebundenen Netzwerks LAN und/oder eines Mobilfunknetzwerks WLAN. Das Mobilfunknetzwerk WLAN umfasst insbesondere auch Mobilfunknetzwerke gemäß einem 3G-, 4G- und/oder 5G- Standard, oder ein Wireless LAN, WiMax, Bluetooth, ZigBee, IEEE 802.15.4 Netzwerk oder einen anderen IoT-Funkstandard wie SigFox oder LoRa.

In einem dritten Verfahrensschritt werden die von dem Backend 100 empfangenen Zuordnungsinformationen I1 - In bereitgestellt S3. Abhängig davon, wie ein jeweiliges Automatisierungssystem AS1, AS2 implementiert ist, umfasst ein Bereitstellen S3 der Zuordnungsinformation I1 - In beispielsweise ein Anzeigen der Zuordnungsinformationen I1 - In aller in dem Automatisierungssystem AS1, AS2 angeordneten Feldgeräte FD1 - FDn. Zusätzlich und/oder alternativ hierzu kann das Bereitstellen S3 der Zuordnungsinformation I1 - In auch ein Bereitstellen S3 an einem jeweiligen Feldgerät FD1 - FDn umfassen. Dann wird die Zuordnungsinformation I1 - In beispielsweise an einem dem Feldgerät FD1 - FDn zugeordneten Anzeigeelement dargestellt oder ist von diesem beispielsweise mittels eines Diagnosegeräts abrufbar.

In einem weiteren Verfahrensschritt wird die von dem Backend 100 übermittelte und bereitgestellte Zuordnungsinformation I1 - In überprüft S4. Das Überprüfen S4 umfasst insbesondere ein Vergleichen mit einer vorgegebenen Zuordnung. Beispielsweise wird einem Sicherheitsbeauftragten für ein Automatisierungssystem AS1, AS2 zu Beginn einer jeden Woche die Soll-Zuordnung für ein jedes der Feldgeräte FD1 - FDn in dem Automatisierungssystem AS1, AS2 vorgegeben. Der Sicherheitsbeauftragte vergleicht diese vorgegebene Zuordnungsinformation mit der von dem Backend 100 übermittelten S2 und bereitgestellten S3 Zuordnungsinformation I1 - In eines jeden Feldgeräts FD1 - FDn.

In einem fünften Verfahrensschritt wird eine vorgegebene Aktion in Abhängigkeit eines Ergebnisses des Überprüfens S4 durchgeführt S5. Insbesondere wenn das Ergebnis des Überprüfens S4 für ein Feldgerät FD1 - FDn ist, dass das Feldgerät FD1 - FDn einem unzulässigen Mandanten T1 - TN zugeordnet ist, wird beispielsweise ein Alarm ausgelöst. Ferner kann vorgesehen sein, das betroffene Feldgerät FD1 - FDn auszuschalten und/oder die Datenkommunikation des Feldgeräts FD1 - FDn zu unterbrechen.

Durch ein solches Verfahren kann ein Ausspionieren eines Automatisierungssystems, wie einer industriellen Produktionsanlage, aufgrund einer fehlerhaften Mandantenzuordnung Z in einem Backend 100 vorteilhaft vermieden werden.

Fig. 6 zeigt ein schematisches Ablaufdiagramm eines Ausführungsbeispiels für ein Verfahren zum Herstellen einer Kommunikationsverbindung zwischen zwei Feldgeräten FD1 - FDn innerhalb eines Automatisierungssystems AS1, AS2.

In einem ersten Verfahrensschritt stellt das erste Feldgerät FD1 eine Anfrage zum Herstellen der Kommunikationsverbindung S7 an ein Ziel-Feldgerät FD2. Die Anfrage umfasst dabei insbesondere die Zuordnungsinformation I1 des ersten Feldgeräts FD1.

Das Ziel-Feldgerät FD2 der Anfrage vergleicht C die Zuordnungsinformation I1 des ersten Feldgeräts FD1 mit seiner eigenen Zuordnungsinformation I2. Abhängig von einem Ergebnis des Vergleichs C entscheidet das Ziel-Feldgerät FD2, ob die Kommunikationsverbindung hergestellt wird oder nicht. Wenn I1 = I2, d.h. die Feldgeräte FD1, FD2 sind dem gleichen Mandanten T1 - TN zugewiesen, wird die Kommunikationsverbindung hergestellt S8.1. Falls das Ergebnis ist, dass die Feldgeräte FD1, FD2 nicht dem gleichen Mandanten T1 - TN zugeordnet sind, I1 ≠ I2, wird die Anfrage abgelehnt und die Kommunikationsverbindung wird nicht hergestellt S8.2.

Obwohl die vorliegende Erfindung anhand von Ausführungsbeispielen beschrieben wurde, ist sie vielfältig modifizierbar.

## Patentansprüche

1. Verfahren zum Überprüfen einer in einem Backend (100) für eine Mehrzahl N von Mandanten (T1,...,TN) verwalteten Mandantenzuordnung (Z) von in einem Automatisierungssystem (AS1, AS2) angeordneten Feldgeräten (FD1,...,FDn), wobei ein jedes der Feldgeräte (FD1,...,FDn) mindestens einem der N Mandanten (T1,...,TN) zugeordnet ist und mittels des Backends (100) von dem zugeordneten Mandanten (T1,...,TN) verwaltbar ist, mit:
Speichern (S1) einer Zuordnungsinformation (I1,...,In) für ein jedes der Feldgeräte (FD1,...,FDn) in dem Backend (100), wobei die Zuordnungsinformation (I1,...,In) die Zuordnung des jeweiligen Feldgeräts (FD1,...,FDn) zu dem Mandanten (T1,...,TN) umfasst,
Übermitteln (S2) der Zuordnungsinformation (I1,...,In) an eine dem Automatisierungssystem (AS1, AS2) zugeordnete Empfangseinheit (R1,...,Rp), und
Bereitstellen (S3) der übermittelten Zuordnungsinformation (I1,...,In) durch die Empfangseinheit (Rn,...,Rp) in dem Automatisierungssystem (AS1, AS2).

2. Verfahren nach Anspruch 1,
**dadurch gekennzeichnet,**
**dass** das Übermitteln (S2) der Zuordnungsinformation (I1,...,In) über ein drahtgebundenes Datennetzwerk (LAN) und/oder über ein Mobilfunknetzwerk (WLAN) erfolgt.

3. Verfahren nach Anspruch 1 oder 2,
**dadurch gekennzeichnet,**
**dass** ein jedes der Feldgeräte (FD1,...,FDn) eine dem Feldgerät (FD1,...,FDn) zugeordnete Empfangseinheit (R1,...,Rn) aufweist.

4. Verfahren nach Anspruch 3,
**dadurch gekennzeichnet,**
**dass** zumindest eines der Feldgeräte (FD1,...,FDn) eine dem Feldgerät (FD1,...,FDn) zugeordnete Kommunikationseinrichtung aufweist, die zum Aufbau einer dedizierten Kommunikationsverbindung mit dem Backend (100) eingerichtet ist.

5. Verfahren nach Anspruch 1 oder 2,
**dadurch gekennzeichnet,**
**dass** das Automatisierungssystem (AS1, AS2) eine einzige zentrale Empfangseinheit (R1, R2) aufweist.

6. Verfahren nach Anspruch 5,
**dadurch gekennzeichnet,**
**dass** die einzige zentrale Empfangseinheit (R1, R2) einem Gateway des Automatisierungsnetzwerks (AS1, AS2) zugeordnet ist, welches zur Übertragung von Daten zwischen dem Backend (100) und den Feldgeräten (FD1,...,FDn) gekoppelt ist.

7. Verfahren nach einem der Ansprüche 1 bis 5, **gekennzeichnet durch**:
Überprüfen (S4) der **durch** die Empfangseinheit (R1,...,Rp) bereitgestellten Zuordnungsinformation (I1,...,In).

8. Verfahren nach Anspruch 7,
**gekennzeichnet durch**:
Durchführen (S5) einer vorgegebenen Aktion in Abhängigkeit eines Ergebnisses des Überprüfens (S4) der **durch** die Empfangseinheit (R1,...,Rn) bereitgestellten Zuordnungsinformation (I1,...,In).

9. Verfahren nach Anspruch 7 oder 8,
**dadurch gekennzeichnet,**
**dass** das Überprüfen (S4) der Zuordnungsinformation (I1,...,In) von einer dem Automatisierungssystem (AS1, AS2) zugeordneten Sicherheitsinstanz (SI) automatisiert durchgeführt wird.

10. Verfahren nach einem der Ansprüche 1 bis 9, **gekennzeichnet durch**:
Darstellen der Zuordnungsinformation (I1,...,In) mittels eines dem Feldgerät (FD1,...,FDn) zugeordneten Ausgabegeräts (D) und/oder mittels eines in dem Automatisierungssystem (AS1, AS2) angeordneten zentralen Ausgabegeräts (D).

11. Verfahren nach einem der Ansprüche 1 bis 10,
**dadurch gekennzeichnet,**
**dass** die Zuordnungsinformation (I1,...,In) und/oder die Mandantenzuordnung (Z) kryptographisch geschützt gespeichert (S1) ist und/oder kryptographisch geschützt übermittelt (S2) wird und/oder kryptographisch geschützt verifiziert wird.

12. Verfahren nach einem der Ansprüche 1 bis 11,
**dadurch gekennzeichnet,**
**dass** die Zuordnungsinformation (I1,...,In) ferner eine Mandanteneigenschaft umfasst.

13. Verfahren nach einem der Ansprüche 1 bis 12, **gekennzeichnet durch**:
Anfragen (S7) einer Kommunikationsverbindung zwischen einem ersten Feldgerät (FD1) in dem Automatisierungssystem (AS1) und einem zweiten Feldgerät (FD2) in dem Automatisierungssystem (AS1) **durch** das erste Feldgerät (FD1) mittels einer Anfrage (A), wobei die Anfrage (A) die Zuordnungsinformation (I1) des ersten Feldgeräts (FD1) umfasst, und
Herstellen (S8.1) der Kommunikationsverbindung, wenn die in der Anfrage (A) enthaltene Zuordnungsinformation (I1) mit der Zuordnungsinformation (I2) des zweiten Feldgeräts (FD2) übereinstimmt, oder Ablehnen (S8.2) der Kommunikationsverbindung, wenn die in der Anfrage (A) enthaltene Zuordnungsinformation (I1) mit der Zuordnungsinformation (I2) des zweiten Feldgeräts (FD2) nicht übereinstimmt.

14. Computerprogrammprodukt, welches die Durchführung des Verfahrens nach einem der Ansprüche 1 bis 13 auf einer programmgesteuerten Einrichtung veranlasst.

15. Automatisierungssystem (AS1) mit Feldgeräten (FD1,...,FDn), wobei ein jedes der Feldgeräte (FD1,...,FDn) mittels eines Backends (100) durch einen zugeordneten Mandanten (T1,...,TN) einer Mehrzahl N von Mandanten (T1,...,TN) verwaltbar ist, wobei das Backend (100) zum Verwalten einer Mandantenzuordnung (Z) umfassend eine Zuordnungsinformation (I1,...,In) für ein jedes der Feldgeräte (FD1,...,FDn) eingerichtet ist, und wobei das Automatisierungssystem (AS1) eine Anzahl von Empfangseinheiten (R1,...,Rn) aufweist, die zum Empfangen und zum Bereitstellen der Zuordnungsinformation (I1,...,In) für ein jedes der in dem Automatisierungssystem (AS1) angeordneten Feldgeräte (FD1,...,FDn) eingerichtet ist.
